# EUROPEAN PATENT APPLICATION

(11) **EP 4 468 423 A1**
(43) Date of publication of application: **27.11.2024**
(21) Application number: 24168507.2
(22) Date of filing: 04.04.2024
(51) Int. Cl.: H01M 4/66, H01M 4/133, H01M 4/587, H01M 10/0525, H01M 4/02

(54) **ELECTRODE FOR RECHARGEABLE BATTERY, ELECTRODE ASSEMBLY, AND RECHARGEABLE BATTERY INCLUDING THE SAME**

(30) Priority: 22.05.2023 KR 20230065889
(71) Applicant: Samsung SDI Co., Ltd., Yongin-si, Gyeonggi-do 17084 (KR)
(72) Inventor: KO, Youngsan, 17084 Yongin-si (KR); KANG, Younghye, 17084 Yongin-si (KR); OH, Songyul, 17084 Yongin-si (KR); LEE, Junsik, 17084 Yongin-si (KR); LEE, Gunwook, 17084 Yongin-si (KR); LEE, Boram, 17084 Yongin-si (KR)
(74) Representative: Marks & Clerk LLP

(57) **Abstract**

An electrode for a rechargeable battery according to an embodiment includes a substrate having a first surface and a second surface, a middle layer on the first surface of the substrate, and a first active material layer on the middle layer, wherein a surface roughness of the first surface of the substrate and a surface roughness of the second surface of the substrate are different, and the middle layer is on the first surface having a relatively larger surface roughness than the second surface.

## Description

### BACKGROUND

### 1. Field

Embodiments of the present disclosure relate to an electrode for batteries. For example, embodiments of the present disclosure relate to an electrode for a rechargeable battery, and an electrode assembly and a rechargeable battery including the same.

### 2. Description of the Related Art

As technical developments and demands on mobile devices have increased, demands on rechargeable batteries as an energy source have also increased.

A rechargeable battery may be accomplished by placing an electrode assembly formed by providing electrodes on both sides of a separator to be wound into a jelly-roll shape or an electrode assembly formed by stacking a sheet-shaped electrode and separator in a case together with an electrolyte solution, and closing and sealing the opening of the case with a cap assembly.

An electrode plate that makes up the electrode may be manufactured of a rolled foil or an electrolytic foil. The rolled foil has superior physical properties compared to the electrolytic foil, but is relatively expensive, while the electrolytic foil is relatively inexpensive but has relatively poorer physical properties.

Among these, the electrolytic foil has different roughness on the front and back surfaces, which causes a difference in contact resistance with an active material layer, which has a negative effect on an electrode performance.

In some embodiments, as the thickness of the electrolytic foil becomes thinner and rigidity increases, the difference in the roughness between the front and back surfaces of the substrate increases, and the electrode performance further deteriorates.

### SUMMARY

Accordingly, an embodiment provides an electrode, and an electrode assembly and a rechargeable battery including the same for preventing or reducing deterioration of battery performance due to differences in the roughness between the front and back surfaces of the substrate.

An electrode for a rechargeable battery according to an embodiment includes a substrate having a first surface and a second surface, a middle layer on (e.g. formed on) the first surface of the substrate, and a first active material layer on (e.g. formed on) the middle layer, wherein the surface roughness of the first and second surfaces of the substrate are different, and the middle layer is on (e.g. formed on) the first surface (of the substrate) with a relatively greater surface roughness than on the second surface (of the substrate) (e.g. the first surface of the substrate has a relatively greater surface roughness than the second surface of the substrate).

The middle layer may be provided (e.g. formed) along the surface of protrusions and depressions on (e.g. formed on) the first surface.

The middle layer may have a thickness of 0.01 % to 5% of the electrode thickness.

The thickness of the middle layer may be 10 nm to 5 µm, or, for example, the thickness of the middle layer may be 20 nm to 2 µm.

The surface roughness of the middle layer may have a smaller value than the surface roughness of the first surface (of the substrate).

The surface roughness of the first surface of the substrate : the surface roughness of the second surface of the substrate may have a ratio of 1 : 1 to 100 : 1.

The surface roughness of the first surface (of the substrate) may be over 1.5 µm, and/or the surface roughness of the second surface (of the substrate) may be 0.1 µm to 1 µm.

A second active material layer on (e.g. formed on) the second surface (of the substrate) may be further included.

The first active material layer and/or the second active material layer may be a negative active material including carbon.

The average particle size of the negative active material may be larger than the gap between protrusions on (e.g. formed on) one surface of the substrate.

The middle layer may include a carbon-based conductive material and a binder.

The carbon-based conductive material may be a carbon-based conductive material included in the first active material layer (e.g. may include the same carbon-based conductive material as the first active material layer).

The substrate may be formed of copper.

An electrode assembly according to an embodiment includes a first electrode of the above-described electrode, a second electrode of an opposite polarity to the first electrode, and a separator between (e.g. positioned between) the first electrode and the second electrode.

A rechargeable battery according to an embodiment of the present disclosure includes the above-described electrode assembly, a case that accommodates the electrode assembly and an electrolyte, and a cap assembly that covers and seals the case.

At least some of the above and other features of the invention are set out in the claims.

By providing the middle layer on the substrate with different surface roughnesses as in an embodiment, it is possible to provide the rechargeable battery with an increased contact area between the active material layer and the substrate, and thus, a reduced interface resistance.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a cross-sectional view of a rechargeable battery according to an embodiment.
FIG. 2 is an SEM photo of a roughness of a first surface of a substrate, a second surface of the substrate, and a surface of a middle layer according to an embodiment.
FIG. 3 is an SEM photo of a cross-section of an electrode according to an embodiment.
FIG. 4 is a graph measuring a resistance of an electrode according to embodiments of the present disclosure and a comparative electrode.
FIG. 5 is a schematic perspective view of a rechargeable battery according to an embodiment.
FIG. 6 is a view shown by cutting a line VI-VI' in FIG. 5.
FIG. 7 is a schematic drawing of a cylindrical rechargeable battery according to an embodiment.
FIG. 8 is a schematic view of a pouch-type (or pouch kind) rechargeable battery according to an embodiment.

### DETAILED DESCRIPTION

The subject matter of the present disclosure will be described more fully hereinafter with reference to the accompanying drawings, in which embodiments of the present disclosure are shown. As those skilled in the art would realize, the described embodiments may be modified in various different ways, all without departing from the scope of the present disclosure.

Further, because sizes and thicknesses of constituent members shown in the accompanying drawings may be arbitrarily given for better understanding and ease of description, the present disclosure is not limited to the illustrated sizes and thicknesses.

In the drawings, the thickness of layers, films, panels, regions, etc., may be exaggerated for clarity. In the drawings, for better understanding and ease of description, the thicknesses of some layers and areas are excessively displayed. It should be understood that if an element such as a layer, film, region, or substrate is referred to as being "on" another element, it can be directly on the other element, or intervening elements may also be present.

Unless explicitly described to the contrary, the word "comprise," and variations such as "comprises" or "comprising," should be understood to imply the inclusion of the stated elements but not the exclusion of any other elements.

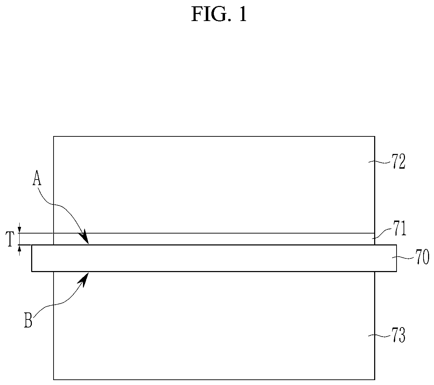

FIG. 1 is a cross-sectional view of a rechargeable battery according to an embodiment.

As shown in FIG. 1, an electrode according to an embodiment includes a substrate 70, a middle layer 71 on one surface of the substrate 70, a first active material layer 72 on one surface of the substrate, and a second active material layer 73 on the other surface of the substrate 70.

The thickness of the electrode according to an embodiment may be 100 µm to 200 µm. In some embodiments, the thickness of the electrode is the total thickness as the sum of the thickness of the substrate 70, the thickness of the middle layer 71, the thickness of the first active material layer 72, and the thickness of the second active material layer 73.

The substrate 70 may be made of copper, and the thickness of the substrate 70 may be from 4 µm to 20 µm. If one surface and the other surface of the substrate 70 are referred to as a first surface A and a second surface B, respectively, the surface roughness of the first surface A and that of the second surface B have different values, and the surface roughness of the first surface A may have a larger value than the surface roughness of the second surface B. In some embodiments, the surface roughness of the first surface A and the surface roughness of the second surface B may have a ratio of 1 : 1 to 100 : 1, for example, the surface roughness of the first surface A may be 1.5 µm or more, and/or the surface roughness of the second surface B may be 0.1 µm to 1 µm. The surface roughness may be measured by SEM (Scanning Electron Microscope).

The first surface and the second surface may have a different plate adherence due to different surface roughnesses, and the first surface having the relatively larger surface roughness has smaller adherence. For example, the plate adherence of the first surface may be 0.79 gf/mm, and/or the plate adherence of the second surface may be 1.23 gf/mm.

The middle layer 71 may be on the first surface A, which has a relatively larger surface roughness.

The middle layer 71 is a layer to effectively control a resistance (e.g., electrical resistance) by improving a binding strength between the substrate 70 and the first active material layer 72, and may be directly in contact with the substrate 70. The middle layer 71 may be on one or both surfaces of the substrate.

The thickness T of the middle layer 71 may be, for example, 0.01 % to 5% of the electrode thickness, and/or the thickness of the middle layer may be, for example, 10 nm to 5 µm. In some embodiments, the thickness of the middle layer may be 20 nm to 2 µm. By forming the middle layer with this thickness, the binding strength between the substrate and the active material layer is further improved, and increased interface resistance (e.g., interface electrical resistance) is avoided.

The middle layer 71 may be provided depending on protrusions and depressions that provide the surface roughness of the substrate 70. The protrusions and depressions may be formed due to a protrusion formed on the substrate 70, and include a portion that is more protruded than the surface of the substrate 70 and a relatively concave portion where the protrusion is not formed and the substrate surface between the protrusions is exposed.

The size and shape, such as the width, height, and volume of the protrusions, are not constant and may have an irregular shape, but the sizes of the protrusions may be smaller than the particle average diameter (e.g. D50) of the active material, which will be further described herein below, and the distance between the protrusions (an interval between the peak points of the neighboring protrusions) may be smaller than the active material particle average diameter. If the average diameter (e.g. D50) of the active material particle is set to 1, the distance between the protrusions may be 0.001 to 0.9 with respect to the active material particle average diameter.

The average diameter may be an average particle diameter D50, and unless otherwise defined in this specification, the average particle diameter D50 refers to the diameter of the particle with a cumulative volume of 50 volume% in the particle size distribution. The average particle size D50 may be measured by any suitable method generally used in the art, for example, by measuring with a particle size analyzer, or by taking a picture or image using a transmission electron microscope or a scanning electron microscope and measuring the particle size in the image. As another method, a measuring device using dynamic light-scattering may be used after performing a data analysis and counting the number of particles for each particle size range, the average particle size D50 value may be obtained by calculating from the number of particles for each particle size range.

In one embodiment, the middle layer 71 may be provided along the protrusions and depressions, for example, the outer surface of the protrusion on the substrate 70 and the surface of the substrate exposed between the protrusions. In some embodiments, the middle layer 71 may be provided along the protrusions and depressions with a constant (or substantially constant) thickness T. The middle layer 71 fills a part of the relatively concave space between the protrusions and relatively reduces the height of the protrusions, thereby flattening the surface of the substrate 70.

In some embodiments, by filling the concave space between the protrusions with some of the middle layer 71, the height of the protrusion becomes from the end of the protrusion to the surface of the middle layer 71, not the surface of the substrate, and the height of the protrusion is relatively lowered, thereby flattening the substrate surface.

In some embodiments, if the middle layer 71 is on one surface of both surfaces of the substrate 70 with relatively rough surface roughness, due to the middle layer 71, the surface flattening of the substrate 70 may be performed, and the active material layer may be more strongly bonded to the substrate due to the middle layer 71.

The middle layer 71 may be formed on the substrate by a dry or wet method. The middle layer 71 includes, for example, a carbon-based conductive material. The carbon-based conductive material included in the middle layer may be selected from the carbon-based conductive material included in the active material layer. The middle layer may include the same carbon-based conductive material as the active material layer. The middle layer may be, for example, a conductive layer (e.g., an electrically conductive layer and/or an ionically conductive layer), as the middle layer includes the carbon-based conductive material. The middle layer may be a conductive layer (e.g., an electrically conductive layer and/or an ionically conductive layer) including, for example, a binder and the carbon-based conductive material.

The middle layer 71 may be formed by a dry method on the substrate by, for example, deposition using CVD and/or PVD. The middle layer may be formed on the substrate by a wet method, for example, by a spin coating, a dip coating, etc. The middle layer may be formed on the substrate, for example, by depositing the carbon-based conductive material on the substrate. The dry-coated middle layer may be formed of the carbon-based conductive material and may not include binders. In some embodiments, the middle layer may be formed on the substrate, for example, by coating and drying a composition including the carbon-based conductive material, the binder, and a solvent onto the substrate surface. The middle layer may be a single-layer structure or a multi-layered structure including a plurality of layers.

The binder included in the middle layer 71 may increase the binding strength between the substrate 70 and the active material layer. The binder included in the middle layer 71 is, for example, a conductive binder (e.g., an electrically conductive binder and/or an ionically conductive binder) or a non-conductive binder.

The conductive binder is, for example, an ion conductive binder, and/or an electronic conductive binder. The binder that has both ion conductivity and electronic conductivity may be referred to as either an ion conductive binder or an electronic conductive binder.

The ion conductive binder may be, for example, polystyrene sulfonate (PSS), polyvinylidene fluoride-hexafluoropropylene (PVDF-HFP), polyvinylfluoride (PVF), polyvinylidene fluoride (PVDF), poly(methylmethacrylate) (PMMA), polyethylene oxide (PEO), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, and/or polyacetylene. The ion conductive binder may include polar functional groups. The ion conductive binder including the polar functional groups, for example, may be nafion, aquivion, flemion, gore, aciplex, morgane ADP, sulfonated poly (ether ether ketone) (SPEEK), sulfonated poly (arylene ether ketone sulfone (SPAEKKS), sulfonated poly(aryl ether ketone (SPAEK), (poly[bis(benzimidazobenzisoquinolinone)] (SPBIBI), poly(styrene sulfonate) (PSS), lithium 9,10-diphenylanthracene-2-sulfonate (DPASLi+), and/or the like.

The electron conductive binder, for example, may be polyacetylene, polythiophene, polypyrrole, poly(p-phenylene), poly(phenylenevinylene), poly(phenylenesulfide), polyaniline, and/or the like. The middle layer may be a conductive layer (e.g., an electrically conductive layer and/or an ionically conductive layer) including, for example, a conductive polymer.

The binder included in the middle layer 71 may be selected from binders included in the active material layer. That is, the middle layer 71 may include the same binder as the active material layer. The binder included in the middle layer 71 is, for example, a fluorine-based binder. The fluorine-based binder included in the middle layer is, for example, polyvinylidene fluoride (PVDF).

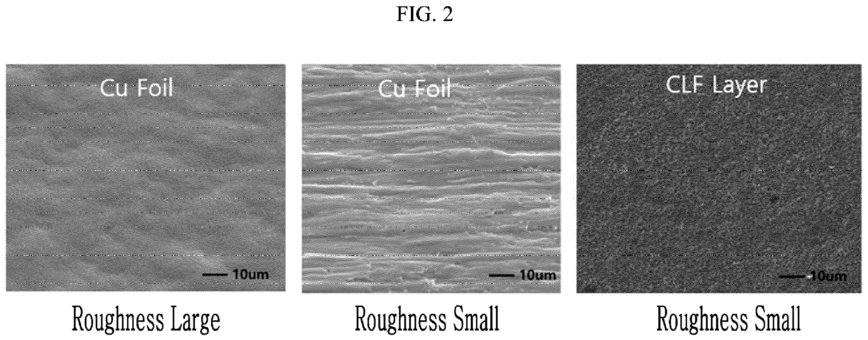

FIG. 2 is an SEM photo of a roughness of a first surface of a substrate, a second surface of the substrate, and a surface of a middle layer according to an embodiment.

As shown in FIG. 2, the first surface and the second surface of the substrate have different surface roughnesses, and it may be confirmed that the surface roughness of the middle layer is small due to the middle layer.

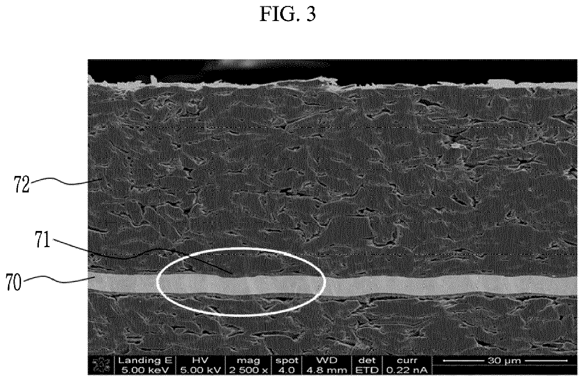

FIG. 3 is an SEM photo of a cross-section of an electrode according to an embodiment.

As shown in FIG. 3, as the middle layer 71 is formed, it may be confirmed that the contact areas between the middle layer 71 and the substrate 70, and the middle layer 70 and the active material layer 72 are increased.

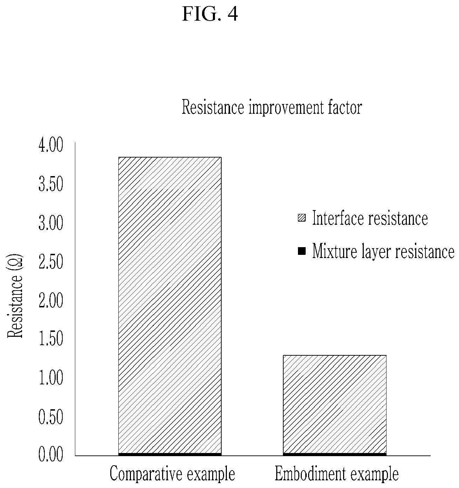

FIG. 4 is a graph measuring a resistance of an electrode according to embodiments of the present disclosure and a comparative electrode.

The comparative example is a graph illustrating the resistance of an embodiment of an electrode on which the middle layer is formed according to an embodiment and a comparative electrode in which an active material layer is formed directly on a substrate.

As shown in FIG. 4, it may be seen that the resistance of the electrode according to the embodiment is reduced compared to the electrode according to the comparative example, and the resistance of the embodiment is reduced by approximately 67% compared to the comparative example.

The foregoing is because, as in an embodiment, the middle layer is formed, which increases the contact area between the active material layer and the substrate, thereby reducing the interface resistance.

Again, referring to FIG. 1, the active material layers 72 and 73 include a first active material layer 72 on the first surface A of the substrate 70 and a second active material layer 73 on the second surface B of the substrate 70.

The active material that makes up the active material layer of the negative electrode may be made of active materials such as graphite and/or other carbon.

The carbon-based negative active material may be an artificial graphite or a mixture of an artificial graphite and a natural graphite. If the artificial graphite or a crystalline carbon-based material that is a mixture of the artificial graphite and the natural graphite is used as the negative active material, compared to if an amorphous carbon-based active material is used, because crystallographic characteristics of particles are more developed, there may be merit in further improving the orientation characteristics of the carbon material in the electrode plate against an external magnetic field. The shape of the artificial graphite and/or natural graphite may be amorphous, plate-shaped, flake-shaped, spherical, fibrous, or a combination thereof, and any suitable form generally used in the art is sufficient. In some embodiments, if the mixture of the artificial graphite and the natural graphite is used, a mixing ratio may be 70 : 30 wt% to 95 : 5 wt%.

In some embodiments, the negative active material layer may further include at least one selected from Si-based negative active material, Sn-based negative active material, and LiMOₓ (M = metal)-based material. If the negative active material layer further includes at least one of the foregoing, for example, if it includes the carbon-based negative active material as the first negative active material and the negative active material as the second negative active material, the mixing ratio of the first negative active material and the second negative active material may be a 50 : 50 to 99 : 1 weight ratio.

The LiMOₓ (M = metal)-based negative active material may be a lithium vanadium oxide.

The Si-based negative active material may be Si, Si-C composite, SiOₓ (0 < x < 2), Si-Q alloy (Q is an element selected from a group consisting of alkali metal, alkaline earth metal, a Group 13 element, a Group 14 element, a Group 15 element, a Group 16 element, transition metal, rare earth element, and combinations thereof, but not Si), the Sn-based negative active material may be Sn, SnO₂, Sn-R alloy (R is an element selected from a group consisting of an alkali metal, an alkaline earth metal, a Group 13 element, a Group 14 element, a Group 15 element, a Group 16 element, a transition metal, a rare earth element, and combinations thereof, but not Sn), etc., and in some embodiments, at least one of the foregoing may be mixed together with SiO₂. As the elements Q and R, any one selected from a group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof may be used (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Tl, Ge, P, As, Sb, Bi, S, Se, Te, and combinations thereof).

The content of the negative active material in the negative active material layer may be 95 wt% to 99 wt% with respect to the entire weight of the negative active material layer.

The negative active material may include a binder and may optionally further include a conductive material (e.g., an electrically conductive material). The content of the binder in the negative active material may be 1 wt% to 5 wt% based on the entire weight of the negative active material. In some embodiments, if the conductive material is further included, the negative active material may be included at 90 wt% to 98 wt%, the binder may be included at 1 wt% to 5 wt%, and the conductive material may be included at 1 wt% to 5 wt%.

The binder serves to adhere the negative active material particles to each other and also to adhere the negative active material to the negative electrode substrate. As the binder, a non-aqueous binder, an aqueous binder, or a combination thereof may be used.

As the non-aqueous binder, polyvinyl chloride, carboxylated polyvinyl chloride, polyvinyl fluoride, polymers including ethylene oxide, polyvinylpyrrolidone, polyurethane, polytetrafluoroethylene, polyvinylidene fluoride, polyethylene, polypropylene, polyamideimide, polyimide, or a combination thereof may be used.

As the aqueous binder, styrene-butadiene rubber, acrylated styrene-butadiene rubber (SBR), acrylonitrile-butadiene rubber, acryl rubber, butyl rubber, ethylenepropylenecopolymer, polyeperohydrin, polyphosphazene, polyacrylonitrile, polystyrene, ethylenepropylene diene copolymer, polyvinylpyridine, chlorosulfonated polyethylene, latex, polyester resin, acryl resin, phenol resin, epoxy resin, polyvinyl alcohol, acrylate-based resin, or combinations thereof may be used.

If the aqueous binder is used as the negative electrode binder, a cellulose-based compound that may impart viscosity may be further included as a thickener. This cellulose-based compound may be used by mixing together one or more types (or kinds) of carboxymethyl cellulose, hydroxypropylmethyl cellulose, methyl cellulose, or alkaline metal salts thereof. As the alkali metal, Na, K and/or Li may be used. The used amount of the thickener may be 0.1 parts by weight to 3 parts by weight with respect to 100 parts by weight of the negative active material.

The conductive material (e.g., electrically conductive material) is used to provide conductivity (e.g., electrical conductivity) to the electrode, and in the battery being constructed, any suitable electronic conductive material generally used in the art may be used as long as it does not cause chemical changes (e.g., does not cause an undesirable change in the rechargeable battery). Examples of the conductive materials include carbon-based materials such as natural graphite, artificial graphite, carbon black, acetylene black, Ketjen black, and carbon fiber; metal-based materials such as metal powder and/or metal fibers such as copper, nickel, aluminium, and silver; conductive polymers such as polyphenylene derivatives; and a conductive material including a mixture thereof.

In some embodiments, a BET-specific area of the negative active material layer may be less than 3.0 m²/g. For example, the BET-specific area of the negative active material layer may be 0.6 m²/g to 1.2 m²/g. If the BET-specific area of the negative active material layer is less than 3.0 m²/g, there may be merit in improving an electrochemical cycle-life characteristic of the cell.

The BET measurement is measured by charging and discharging the rechargeable battery including the negative electrode, cutting the negative electrode obtained by dismantling the fully discharged battery into a set or certain size, placing it in a BET sample holder, and performing a nitrogen gas adsorption method.

The negative electrode may have a cross-section loading level (L/L) of 6 mg/cm² to 65 mg/cm².

The negative electrode for the battery according to an embodiment may be used in electrode assembly of various suitable types (or kinds) of rechargeable batteries.

The rechargeable battery according to an embodiment described below is described as an example in which a wound-type electrode assembly is placed in a square case, but it is not limited thereto, and electrode assemblies such as a stacked type (or kind), a stack and folding type (or kind), and a Z-folding type (or kind) may be applied to batteries placed in cases having a form of cylinders, pouches, coins, etc. Rechargeable batteries may include lithium rechargeable batteries, which may be classified into lithium ion batteries, lithium ion polymer batteries, and lithium polymer batteries according to a type (or kind) of a separator and an electrolyte used, and may be classified into a cylindrical, prismatic, a coin-type (or coin kind), a pouch-type (or pouch kind), etc. according to their shape. Rechargeable batteries may also be divided into a bulk type (or kind) and a thin film type (or kind) according to the size. The structure and manufacturing method of these batteries may be any suitable ones generally used in the art, and thus, further detailed description thereof is not necessary here.

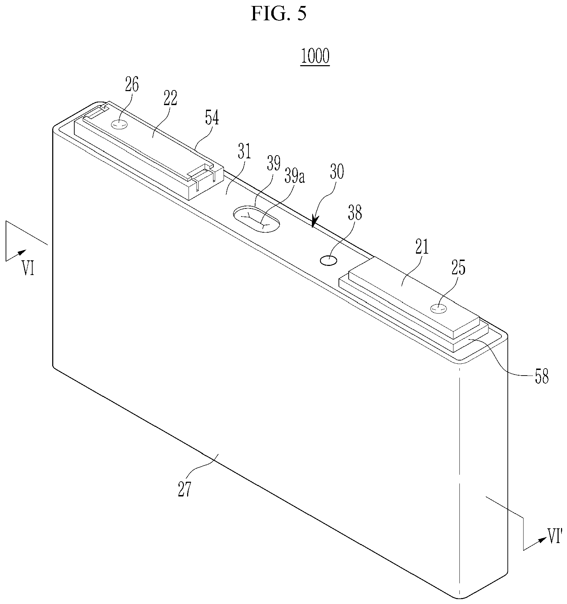

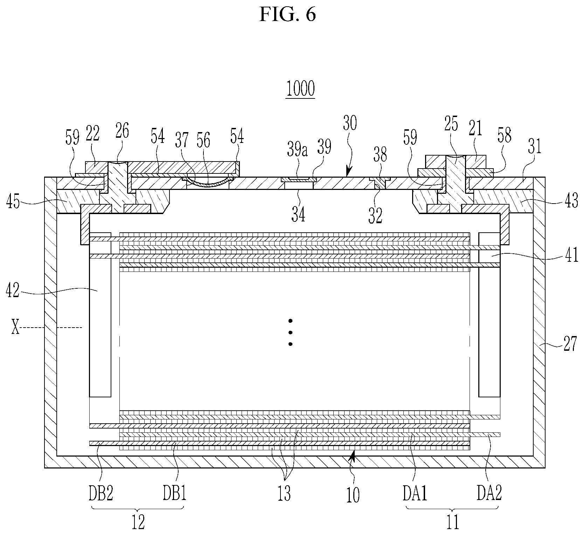

FIG. 5 is a schematic perspective view of a rechargeable battery according to an embodiment. FIG. 6 is a view taken along a line VI-VI' of FIG. 5.

As shown in FIG. 5 and FIG. 6, a rechargeable battery 1000 according to an embodiment may include an electrode assembly 10, a case 27 accommodating the electrode assembly 10, and a cap assembly 30 installed on the opening of the case 27.

The electrode assembly 10 includes a positive electrode 11 and a negative electrode 12 sequentially stacked, and a separator 13 between them. The separator 13 is between the positive electrode 11 and the negative electrode 12, and insulates them (e.g., from each other).

The electrode assembly 10 may be a jelly-roll type (or kind) in which a separator 13 is interposed between the positive electrode (or a first electrode) 11 and the negative electrode (or a second electrode) 12, wound around a winding axis X, and then pressed flat.

The separator 13 is a polymer film that allows lithium ions to pass through, and polyethylene, polypropylene, polyvinylidene fluoride, or two or more multilayers thereof may be used; in some embodiments, mixed multilayers such as a 2-layered separator (e.g. polyethylene/polypropylene), or a 3-layered separator (e.g. polyethylene/polypropylene/polyethylene or polypropylene/polyethylene/polypropylene), etc. may be used.

The positive electrode 11 includes an electrode active region DA1 and an electrode uncoated region DA2, and the electrode active region DA1 includes a substrate formed of a thin plate of a metal foil and a positive electrode active material layer made of a positive electrode active material on the substrate. The electrode uncoated region DA2 is an area where the substrate is exposed because the positive electrode active material layer is not formed, and may be a portion extending from the substrate of the electrode active region DA1.

The electrode uncoated region DA2 of the positive electrode may be positioned at the end of one side of the positive electrode 11 along the length direction of the positive electrode 11.

The substrate of the positive electrode 11 may be aluminium, and a compound capable of reversible intercalation and deintercalation of lithium (a lithiated intercalation compound) may be used as the positive electrode active material. For example, one or more types (or kinds) of complex oxides of a metal selected from cobalt, manganese, nickel, and combinations thereof with lithium may be used. In the positive electrode, the content of the positive electrode active material may be 90 wt% to 98 wt% with respect to the entire weight of the positive electrode active material layer.

In an embodiment, the positive electrode active material may further include a binder and a conductive material. In some embodiments, the content of the binder and that of the conductive material may be 1 wt% to 5 wt%, respectively, based on the entire weight of the positive electrode active material layer.

The binder serves to adhere the positive electrode active material particles to each other and also to adhere the positive electrode active material to the positive electrode substrate. As a representative example of the binder, polyvinyl alcohol, carboxymethyl cellulose, hydroxypropyl cellulose, diacetyl cellulose, polyvinyl chloride, carboxylated polyvinyl chloride, polyvinyl fluoride, polymers including ethylene oxide, polyvinylpyrrolidone, polyurethane, polytetrafluoroethylene, polyvinylidene fluoride, polyethylene, polypropylene, styrene butadiene rubber, acrylate styrene butadiene rubber, epoxy resin, nylon, etc. may be used, but it is not limited thereto.

The conductive material (e.g., electrically conductive material) is used to provide conductivity (e.g., electrical conductivity) to the electrode, and in the battery being constructed, any suitable electronic conductive material generally used in the art may be used as long as it does not cause chemical changes (e.g., does not cause an undesirable change in the rechargeable battery).

The negative electrode 12 may be the negative electrode shown in FIG. 1 described above. The substrate of the negative electrode 12 has two surfaces having different roughnesses, and includes a middle layer on one surface, the one surface having relatively large roughness.

The negative electrode 12 includes an electrode active region DB1 and an electrode uncoated region DB2, and the electrode active region DB1 includes a substrate formed of a metal foil of a thin plate and a negative active material layer formed of a negative active material on the substrate (or a middle layer). The electrode uncoated region DB2 is an area where the substrate is exposed because the negative active material layer is not formed, and may be a part extending from the substrate of the electrode active region DB1.

The electrode uncoated region DB2 of the negative electrode may be positioned at one side end of the negative electrode 12 along the length direction of the negative electrode 12. In some embodiments, the electrode uncoated region DA2 of the positive electrode 11 and the electrode uncoated region DB2 of the negative electrode 12 may be positioned on opposite sides of the electrode active regions DA1 and DB1.

In some embodiments, the electrode uncoated regions of the positive electrode and the negative electrode have the protruded shape at a regular interval along the direction wound from the substrate, or may be positioned at the front or the end of the wound electrode assembly.

In some embodiments, the electrode assembly 10 may be accommodated in the case 27 together with an electrolyte, which includes a non-aqueous organic solvent and a lithium salt.

The non-aqueous organic solvent serves as a medium through which ions involved in the electrochemical reaction of the battery may move.

The lithium salt is dissolved in an organic solvent and acts as a supply source of lithium ions within the battery, thereby enabling basic operation of the rechargeable battery and is a material that promotes the movement of lithium ions between the positive and negative electrodes. As a representative example of these lithium salts, one or two or more selected from a group consisting of LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂), where, x and y are natural numbers, for example, integers from 1 to 20), LiCl, Lil and LiB(C₂O₄)₂ (lithium bis(oxalato) borate: LiBOB) is included as a supporting electrolytic salt. The concentration of the lithium salt may be used within a range of 0.1 M to 2.0 M. If the concentration of the lithium salt is within this range, the electrolyte may have suitable or appropriate conductivity and viscosity, so it may exhibit excellent electrolytic performance, and lithium ions may move effectively.

The case 27 may be made of a metal such as aluminium and may be approximately cuboid. One side of the case 27 may be open, and a cap plate may be installed on the open side of the case 27.

The cap assembly 30 includes a cap plate 31 coupled to the case 27 and closing the opening of the case 27, a positive electrode terminal 21 protruded outside the cap plate 31 and electrically connected to the positive electrode 11, and a negative terminal 22 electrically connected to the negative electrode 12.

The cap plate 31 is in the form of an elongated plate shape connected in one direction and is connected to the opening of the case 27.

The cap plate 31 has an injection port 32 that penetrates to the inside of the case 27. The injection port 32 is for injecting an electrolyte solution, and a sealing stopper 38 is installed. In some embodiments, a vent plate 39 in which a notch 39a is formed to be opened at a set or predetermined pressure is installed in a vent hole 34 in the cap plate 31.

The positive electrode terminal 21 and the negative terminal 22 are installed to be protruding from the cap plate 31. The positive electrode terminal 21 is electrically connected to the positive electrode 11 through a current collecting tab 41, and the negative terminal 22 is electrically connected to the negative electrode 12 through a current collecting tab 42.

A terminal connection member 25 that electrically connects the positive electrode terminal 21 and the current collecting tab 41 is installed between the positive electrode terminal 21 and the current collecting tab 41. The terminal connection member 25 is inserted into a hole formed in the positive electrode terminal 21, and the upper end is fixed to the positive electrode terminal 21 by welding, and the lower end is fixed to the current collecting tab 41 by welding.

A gasket 59 for sealing is installed between the terminal connection member 25 and the cap plate 31 by being inserted into a hole through which the terminal connection member 25 passes, and a lower insulating member 43, into which the lower part of the terminal connection member 25 is inserted, is installed under the cap plate 31. A connection plate 58 is installed between the positive electrode terminal 21 and the cap plate 31 to electrically connect them. The terminal connection member 25 is installed by being inserted into the connection plate 58. Accordingly, the cap plate 31 and the case 27 are charged with the positive electrode 11.

A terminal connection member 26 that electrically connects the negative terminal 22 and the current collecting tab 42 is installed between the negative terminal 22 and the current collecting tab 42. The terminal connection member 26 is inserted into a hole formed in the negative terminal 22, the upper end is fixed to the negative terminal 22 by welding, and the lower end is fixed to the current collecting tab 42 by welding.

The gasket 59 for sealing is installed between the negative terminal 22 and the cap plate 31 by being inserted into a hole through which the terminal connection member 26 passes, and an upper insulating member 54 is installed to insulate the negative terminal 22 and the cap plate 31. The terminal connection member 26 may be installed by being inserted into the hole of the upper insulating member 54, and the upper insulating member 54 may be formed to surround the end of the negative terminal 22.

Also, under the cap plate 31, the lower insulating member 45 is installed to insulate the negative terminal 22 and the current collecting tab 42 from the cap plate 31.

A shorting hole 37 is formed in the cap plate 31, and a shorting member 56 is installed in the shorting hole 37. The shorting member 56 includes a curved portion convexly bent downward in an arc shape and an edge portion formed on the outside of the curved portion and fixed to the cap plate 31. The upper insulating member 54 may have a cut portion that overlaps the shorting hole 37, and the shorting member 56 overlaps the negative terminal 22 exposed through the cut portion.

The shorting member 56 is electrically connected to the cap plate 31, and is deformed if the internal pressure of the rechargeable battery 1000 rises, causing a short circuit between the positive electrode and the negative electrode. In some embodiments, if gas is generated due to an abnormal reaction inside the rechargeable battery, the internal pressure of the rechargeable battery increases. If the internal pressure of the rechargeable battery becomes higher than a set or predetermined pressure, the curved portion is deformed to be convex upward, and at this time, the negative terminal 22 and the shorting member 56 come into contact, causing a short circuit.

To facilitate the shorting of the negative terminal 22 and the shorting member 56, the negative terminal 22 may further include at least one or more protrusions protruding toward the shorting member 56, and the protrusions may be spaced apart from the shorting member 56.

In the above embodiment, the rechargeable battery including the prismatic case has been described, but the battery is not limited thereto and may include a cylindrical case or a pouch-type (or pouch kind) case.

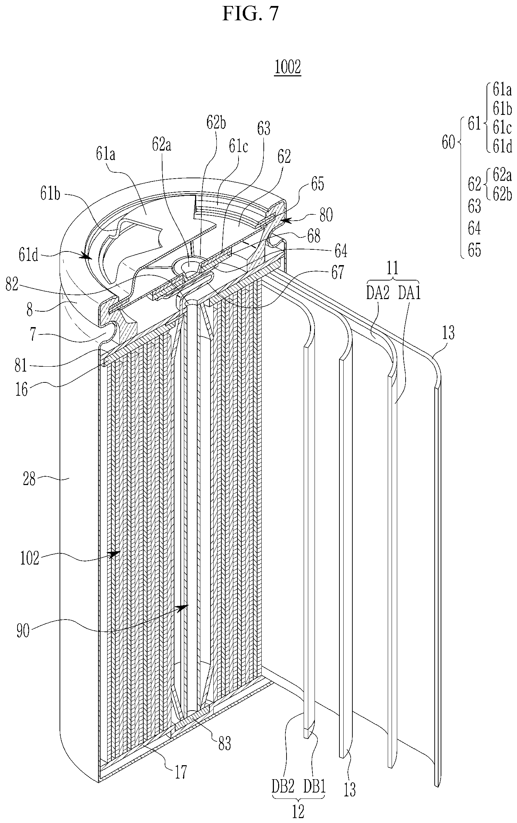

FIG. 7 is a schematic view of a cylindrical rechargeable battery according to an embodiment.

Most of the electrode assembly in FIG. 7 is the same as the rechargeable battery in FIG. 1 to FIG. 3, so only the different parts will be explained in more detail.

As shown in FIG. 7, a rechargeable battery 1002 according to an embodiment includes an electrode assembly 102, a case 28 accommodating the electrode assembly 102, a cap assembly 60 coupled to the opening of the case 28 via a gasket interposed therebetween and electrically connected to the electrode assembly 102, an insulating plate 81 between the cap assembly 60 and the electrode assembly 102, and a center pin 90 on the center of the electrode assembly 102.

The electrode assembly 102 includes the positive electrode 11, the separator 13, and a negative electrode 12 sequentially stacked. The electrode assembly 102 may be a cylindrical jelly roll in which the positive electrode 11, the separator 13, and the negative electrode 12 are stacked and wound around the center pin 90.

The electrode assembly 102 may be formed of the same stacked structure and material as the electrode assembly in FIG. 5 and FIG. 6, except that it is cylindrical.

The negative electrode 12 may be the negative electrode shown in FIG. 1 as described. The negative electrode 12 has a substrate, and a middle layer on one surface of the substrate. The substrate has a first surface and a second surface, and a surface roughness of the first surface of the substrate and a surface roughness of the second surface of the substrate are different. The middle layer is on the first surface having a relatively larger surface roughness than the second surface.

In the jelly-roll state, the positive current collecting plate 16 is connected to the positive electrode uncoated region DA2 of the electrode assembly 102, and the negative current collecting plate 17 is connected to the negative uncoated region DB2 of the electrode assembly 102.

While the negative current collecting plate 17 is in contact with the case 28, the positive current collecting plate 16 is formed to have a width narrower than the negative current collecting plate 17, so that the positive current collecting plate 16 is not in contact with the case 28.

The positive electrode uncoated region DA2 may be bent toward the center pin 90, which is the center of the electrode assembly 102, and the electrode uncoated regions DA2 of the neighboring positive electrodes may be overlapped so that they are electrically connected. The electrode uncoated region DA2 of the positive electrode may be electrically connected to the positive current collecting plate 16 in the overlapped state.

The electrode uncoated region DA2 of the positive electrode includes one surface that is electrically connected by being in contact with the positive current collecting plate 16 and the other surface that faces the end of the negative electrode 12, and the other surface is spaced apart from the end of the negative electrode 12.

A lead tab 67 is electrically connected to the positive current collecting plate 16.

One end of the lead tab 67 may be connected to the positive current collecting plate 16 by welding, and the other end may be electrically connected to cap assembly 60. The lead tab 67 may be bent so that one surface faces the electrode assembly 102 to increase the contact area with the cap assembly 60.

An insulating plate 81 having an opening exposing the center pin 90 is positioned above the positive current collecting plate 16.

The insulating plate 81 is formed larger than the positive current collecting plate 16 so that the insulating plate 81 may be in contact with the inner surface of the case 28. In this way, if the insulating plate 81 is formed larger than the positive current collecting plate 16, a constant gap (e.g., a substantially constant gap) is formed between the positive current collecting plate 16 and the case 28 by the width of the insulating plate 81 protruding out of the positive current collecting plate 16. The gap between the positive current collecting plate 16 and the case 28 may prevent or reduce contact of the positive current collecting plate 16 with the case 28 to form a shortcircuited shape.

The lead tab 67 may be connected by being in contact with a first auxiliary plate 64 of the electrode assembly 102, which will be further described herein below, through the opening 82 of the insulating plate 81.

Because the electrode assembly 102 is wound around the center pin 90, the center pin 90 may be positioned at the center of the electrode assembly 102 and be parallel (e.g., substantially parallel) to the direction in which the electrode assembly 102 is inserted into the case 28.

The center pin 90 is designed to minimize or reduce deformation and/or maintain a shape close to the shape before the deformation if receiving a full-surface compressive load or a local impact load acting from the outside of the rechargeable battery, and may be in the form of a hollow circular pipe. In some embodiments, the center pin 90 may serve as a passage for gas generated internally. If necessary or desired, the center pin 90 may be omitted.

The center pin 90 may be formed of a material having a set or certain rigidity, for example, a metal having conductivity (e.g., electrical conductivity) such as steel, steel alloy, aluminium, aluminium alloy, etc., in order to be minimally deformed against an external impact (or to reduce deformation resulting from an external impact). In this way, because the center pin 90 has conductivity (e.g., electrical conductivity), both ends of the center pin 90 are installed to maintain an electrical insulation from the positive current collecting plate 16 and the negative current collecting plate 17.

In some embodiments, an insulating pad 83 is between the lower end of the center pin 90 and the corresponding negative current collecting plate 17. The upper end of the center pin 90 penetrates the through-hole formed in the center of the positive current collecting plate 16 in an insulated state and is supported on the insulating plate 81. In some embodiments, the upper end of the center pin 90 may be spaced apart from the through-hole of the positive current collecting plate 16, and an insulating member may be interposed between them. Therefore, the movement of the center pin 90 may be restricted in the length direction of the center pin 90, and the center pin 90 may be maintained in a stable state at the center of the electrode assembly 102.

The case 28 may have one side that is opened so that the electrode assembly 102 may be inserted along with the electrolyte, and may be formed to have approximately the same cylindrical shape as the jelly-roll shaped electrode assembly 102.

In some embodiments, the case 28 may include a circular bottom portion and a cylindrical side portion extending a certain length from the bottom portion toward the upper direction. During the assembly process of the rechargeable battery, the upper portion of the cylindrical case may be opened. Therefore, during the assembly process of the rechargeable battery, the electrode assembly may be inserted into the cylindrical case, and then the electrolyte solution may be injected into the cylindrical case.

The case 28 may be connected to the negative current collecting plate 17 of the electrode assembly and act as a negative terminal of the rechargeable battery. Therefore, the case 28 may be made of a conductive metal (e.g., an electrically conductive metal) such as aluminium, aluminium alloy and/or nickel-plated steel.

The cap assembly 60 is positioned in the opening of the case 28 and is coupled to the case 28 with a gasket 80 therebetween. The gasket 80 insulates the case 28 and the cap assembly 60, and closes and seals the inside of the case 28, which holds the electrode assembly 102 and the electrolyte solution.

The cap assembly 60 includes a cap plate 61, a positive temperature coefficient element 65, a vent plate 62, an insulating member 63, a first auxiliary plate 64, and a second auxiliary plate 68.

The first auxiliary plate 64 may be electrically connected to the lead tab 67 of the electrode assembly, and may be bonded to the lead tab 67 by welding.

The second auxiliary plate 68 may be stacked on the first auxiliary plate 64 and be electrically connected to first auxiliary plate 64, and may be bonded to first auxiliary plate 64 by a welding. The second auxiliary plate 68 is positioned in the center of the electrode assembly 102 corresponding to the center pin 90 and has a through-hole exposing the first auxiliary plate 64.

A vent plate 62 is positioned on the second auxiliary plate 68 with the insulating member 63 therebetween. The edge of the vent plate 62 may be inserted into the gasket 80 and connected to the case 28.

The vent plate 62 includes a vent 62a positioned in the area corresponding to center pin 90. The vent 62a protrudes from the vent plate 62 toward the electrode assembly 102, and is electrically connected by being in contact with the first auxiliary plate 64 through a through-hole. The vent plate 62 may have a notch 62b that guides the breakage of the vent 62a around the vent 62a.

The vent 62a may be damaged under a set or predetermined pressure condition, release internal gas to the outside and block or reduce the electrical connection with the first auxiliary plate 64. In some embodiments, if the internal pressure of the case 28 increases due to the generation of gas, the notch 62b is damaged in advance and the gas is discharged to the outside through an exhaust port 61d, which will be further described herein below, thereby preventing explosion of the rechargeable battery, or thereby reducing a likelihood or rate of occurrence of explosion of the rechargeable battery.

In some embodiments, if the abnormal reaction continues and the vent 62a is damaged, the electrical connection between the vent plate 62 and the first auxiliary plate 64 is broken. Therefore, the electrical connection between a cap plate 61 and the first auxiliary plate 64, which are electrically connected to the vent plate 62, is broken and no more (or substantially no more) current flows.

The cap plate 61 includes a center plate 61a corresponding to the center pin 90 that is the center of the electrode assembly 102, a plurality of branch portions 61b extending from the center plate 61a toward the gasket 80, and a coupling plate 61c connects one end of the branch portions 61b and is inserted into the gasket 80 to be coupled. The exhaust port 61d is formed between the adjacent branch portions 61b that is open to the outside and discharges internal gas.

The branch portions 61b are bent from the coupling plate 61c and connected to the center plate 61a, so that the center of the cap plate 61 may form the shape protruded to the outside of the case 28. The cap plate 61 is electrically connected to the positive current collecting plate 16 through the vent plate 62, the second auxiliary plate 68, the first auxiliary plate 64, and the lead tab 67, thereby being used as the positive electrode terminal of the rechargeable battery. Therefore, if the center of the cap plate 61 protrudes to the outside of the case 28, a terminal connection with external devices may be facilitated.

In some embodiments, a positive temperature coefficient element 65 may be formed along the second plate of the cap plate 61, and may be inserted and coupled to the gasket 80 in a stacked state between the second plate of the cap plate and the edge of the vent plate.

The positive temperature coefficient element 65 is installed between the cap plate 61 and the vent plate 62 so that the current flow may be controlled between the cap plate 31 and the vent plate 62, depending on the internal temperature of the rechargeable battery.

If the internal temperature is within a set or predetermined range, the positive temperature coefficient element 65 acts as a conductor (e.g., an electrical conductor) and electrically connects the cap plate 61 and the vent plate 32. However, if the internal temperature exceeds a set or predetermined temperature, the positive temperature coefficient element 65 has an electrical resistance that increases to infinity. Therefore, the positive temperature coefficient element 65 may block or reduce the flow of a charge or discharge current between the cap plate 61 and the vent plate 62.

In the state in which the electrode assembly 102 is inserted into the case 28, the cap assembly 60 is inserted into the gasket 80 and then inserted into the opening of the case 28 with the state that the vent plate 62, the positive temperature coefficient element 65, and the cap plate 61 are stacked on the edge of the cap assembly 60.

Then, the cap assembly 60 is fixed to the opening of the case 28 through a crimping process. At this time, a beading portion 7 and a crimping portion 8 may be formed on the side adjacent to the opening of the case 28. The beading portion 7 may be formed through a beading process. The beading portion 7 is a structure that is depressed in the center of the diameter direction of the case 28 from the upper side of the case 28 while the electrode assembly 102 is accommodated in the case 28, and prevents or reduces up and down movement of the electrode assembly 102.

The crimping portion 8 is connected to the beading portion 7 in a structure that protrudes relatively more than the beading portion 7 in the diameter direction, and holds the external peripheral (e.g., circumferential) surface of the cap assembly 60, and the upper and lower surfaces connected to this external peripheral (e.g., circumferential) surface through the gasket 80.

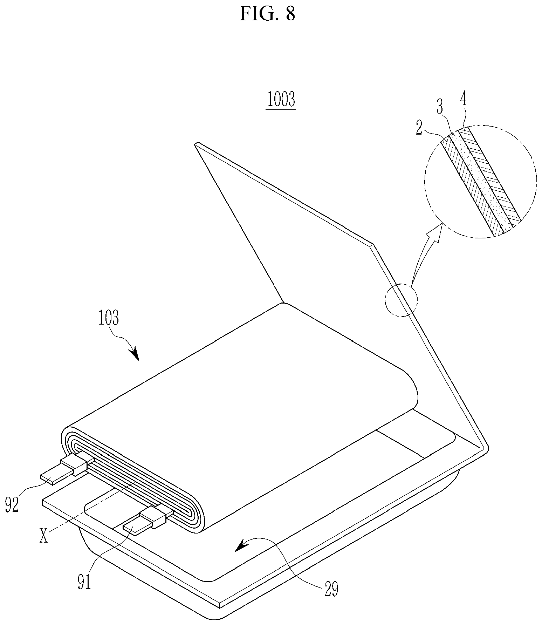

FIG. 8 is a schematic drawing of a pouch-type (or pouch kind) rechargeable battery according to another embodiment.

Most of the electrode assembly in FIG. 8 is the same as the electrode assembly in FIG. 5 and FIG. 6 so only the different parts will be explained in more detail.

As shown in FIG. 8, a rechargeable battery 1003 according to another embodiment includes an electrode assembly 103 and a pouch 29.

As shown in FIG. 5 and FIG. 6, the electrode assembly 103 has a jelly-roll shape in which a positive electrode, a separator, and a negative electrode are stacked and wound around a winding axis X, and the electrode assembly 103 may be wound and then pressed flat, and may have an oval shape in which a cross-section cut in a vertical direction across the winding axis X is elongated in one direction.

The electrode assembly 103 may be formed of the same stacked structure and material as the electrode assembly in FIG. 5 and FIG. 6.

The negative electrode may be the above-described negative electrode shown in FIG. 1. The substrate of the negative electrode has two surfaces having different roughnesses and includes a middle layer on the surface having a relatively larger roughness.

Electrode tabs 91 and 92 may be connected to the electrode uncoated region by ultrasonic welding, laser welding, and/or resistance welding, and may protrude out of the electrode uncoated region. The electrode tabs 91 and 92 may include aluminium, such as the substrate of the positive electrode, and a protective tape may be attached to the electrode tabs 91 and 92 to protect the electrode tabs 91 and 92.

The electrode assembly 103 may be put into a pouch-type (or pouch kind) case 29 together with the electrolyte. The pouch-type (or pouch kind) case 29 may be formed of a laminate exterior material, and the laminate exterior material may be formed of a multi-layered structure having, for example, a first insulating layer 2, a metal layer 3, and a second insulating layer 4. In some embodiments, various suitable other adhesive layers or functional layers may be added.

The first insulating layer 2 may be formed of an insulating (e.g., electrically insulating) and heat-adherable material on the inner surface of the laminate exterior material, and may be sealed by heat-sealing the edge while the electrode assembly 103 is accommodated. In some embodiments, the first insulating layer 2 may be formed on one surface of the metal layer 3 and may form the inner surface of the laminate exterior material facing the electrode assembly 103. The first insulating layer 2 may be formed of cast polypropylene (CPP) and/or an equivalent thereto, which does not react (or substantially does not react) with the electrolyte solution. In some embodiments, the second insulating layer 4 may be formed on the other surface of the metal layer 3 and may form the outer surface of the laminate exterior material. The second insulating layer 4 may be formed of a PET (polyethylene terephthalate) sheet, a nylon sheet, or a PET-nylon composite sheet.

While the subject matter of this disclosure has been described in connection with what is presently considered to be practical embodiments, it should be understood that the present disclosure is not limited to the disclosed embodiments. On the contrary, it is intended to cover various modifications and equivalent arrangements included within the scope of the appended claims, and equivalents thereof.

Embodiments are set out in the following clauses:
Clause 1. An electrode for a rechargeable battery comprising:
   a substrate having a first surface and a second surface,
   a middle layer formed on the first surface of the substrate, and
   a first active material layer formed on the middle layer,
   wherein the surface roughness of the first and second surfaces of the substrate are different, and the middle layer is formed on the first surface with a relatively greater surface roughness than the second surface.
Clause 2. The electrode for the rechargeable battery of clause 1, wherein:
   the middle layer is formed along the surface of protrusions and depressions formed on the first surface.
Clause 3. The electrode for the rechargeable battery of clause 1 or clause 2, wherein:
   the middle layer has a thickness of 0.01% to 5% of the electrode thickness.
Clause 4. The electrode for the rechargeable battery of any one of clauses 1 to 3, wherein:
   the thickness of the middle layer is 10 nm to 5 µm.
Clause 5. The electrode for the rechargeable battery of any one of clauses 1 to 4, wherein:
   the thickness of the middle layer is 20 nm to 2 µm.
Clause 6. The electrode for the rechargeable battery of any one of clauses 1 to 5, wherein:
   the surface roughness of the middle layer has a smaller value than the surface roughness of the first surface.
Clause 7. The electrode for the rechargeable battery of any one of clauses 1 to 6, wherein:
   the surface roughness of the first surface of the substrate : the surface roughness of the second surface has a ratio of 1 : 1 to 100 : 1.
Clause 8. The electrode for the rechargeable battery of any one of clauses 1 to 7, wherein:
   the surface roughness of the first surface is over 1.5 µm, and the surface roughness of the second surface is 0.1 µm to 1 µm.
Clause 9. The electrode for the rechargeable battery of any one of clauses 1 to 8, further comprising:
   a second active material layer formed on the second surface.
Clause 10. The electrode for the rechargeable battery of clause 9, wherein:
   the first active material layer and the second active material layer are a negative active material comprising carbon.
Clause 11. The electrode for the rechargeable battery of clause 9 or clause 10, wherein:
   an average particle size of the negative active material is larger than the gap between protrusions formed on one surface of the substrate.
Clause 12. The electrode for the rechargeable battery of any one of clauses 1 to 11, wherein:
   the middle layer comprises a carbon-based conductive material and a binder.
Clause 13. The electrode for the rechargeable battery of clause 12, wherein:
   the carbon-based conductive material is a carbon-based conductive material included in the first active material layer.
Clause 14. The electrode for the rechargeable battery of any one of clauses 1 to 13, wherein:
   the substrate is formed of copper.
Clause 15. An electrode assembly comprising:
   a first electrode of an electrode of any one of clauses 1 to 14,
   a second electrode of an opposite polarity to the first electrode, and
   a separator positioned between the first electrode and the second electrode.
Clause 16. A rechargeable battery comprising:
   an electrode assembly of clause 15,
   a case that accommodates the electrode assembly and an electrolyte, and
   a cap assembly that covers and seals the case.

## Claims

1. An electrode for a rechargeable battery comprising:
a substrate having a first surface and a second surface,
a middle layer on the first surface of the substrate, and
a first active material layer on the middle layer,
wherein a surface roughness of the first surface of the substrate and a surface roughness of the second surface of the substrate are different, and the middle layer is on the first surface having a relatively larger surface roughness than the second surface.

2. The electrode for the rechargeable battery as claimed in claim 1, wherein:
the middle layer is provided along protrusions and depressions on the first surface.

3. The electrode for the rechargeable battery as claimed in claim 1 or claim 2, wherein:
the middle layer has a thickness of 0.01% to 5% of the electrode thickness.

4. The electrode for the rechargeable battery as claimed in any one of claims 1 to 3, wherein:
the thickness of the middle layer is 10 nm to 5 µm; optionally wherein the thickness of the middle layer is 20 nm to 2 µm.

5. The electrode for the rechargeable battery as claimed in any one of claims 1 to 4, wherein:
the surface roughness of the middle layer has a smaller value than the surface roughness of the first surface.

6. The electrode for the rechargeable battery as claimed in any one of claims 1 to 5, wherein:
the surface roughness of the first surface of the substrate : the surface roughness of the second surface of the substrate has a ratio of 1 : 1 to 100 : 1.

7. The electrode for the rechargeable battery as claimed in any one of claims 1 to 6, wherein:
the surface roughness of the first surface is over 1.5 µm, and/or the surface roughness of the second surface is 0.1 µm to 1 µm.

8. The electrode for the rechargeable battery as claimed in any one of claims 1 to 7, further comprising:
a second active material layer on the second surface.

9. The electrode for the rechargeable battery as claimed in claim 8, wherein:
the first active material layer and/or the second active material layer is/are a negative active material comprising carbon.

10. The electrode for the rechargeable battery as claimed in claim 9, wherein:
an average particle size of the negative active material is larger than the gap between protrusions on one surface of the substrate.

11. The electrode for the rechargeable battery as claimed in any one of claims 1 to 10, wherein:
the middle layer comprises a carbon-based conductive material and a binder.

12. The electrode for the rechargeable battery as claimed in claim 11, wherein:
the carbon-based conductive material comprises a carbon-based conductive material included in the first active material layer.

13. The electrode for the rechargeable battery as claimed in any one of claims 1 to 12, wherein:
the substrate comprises copper.

14. An electrode assembly comprising:
a first electrode comprising the electrode as claimed in any one of claims 1 to 13,
a second electrode of an opposite polarity to the first electrode, and
a separator positioned between the first electrode and the second electrode.

15. A rechargeable battery comprising:
an electrode assembly as claimed in claim 14,
a case that accommodates the electrode assembly and an electrolyte, and
a cap assembly that covers and seals the case.
